# EUROPEAN PATENT SPECIFICATION

(11) **EP 3 002 816 B1**
(45) Date of publication and mention of the grant of the patent: **21.02.2018**
(21) Application number: 14855111.2
(22) Date of filing: 27.10.2014
(51) Int. Cl.: H01M 10/0567, H01M 10/0569, H01M 10/0568, H01M 10/052

(54) **NON-AQUEOUS ELECTROLYTE SOLUTION FOR LITHIUM SECONDARY BATTERY AND LITHIUM SECONDARY BATTERY COMPRISING SAME**
NICHTWÄSSRIGE ELEKTROLYTLÖSUNG FÜR EINE LITHIUMSEKUNDÄRBATTERIE UND LITHIUMSEKUNDÄRBATTERIE DAMIT
SOLUTION ÉLECTROLYTIQUE NON AQUEUSE POUR BATTERIE SECONDAIRE AU LITHIUM ET BATTERIE SECONDAIRE AU LITHIUM LA COMPRENANT

(30) Priority: 25.10.2013 KR 20130127901
(43) Date of publication of application: 06.04.2016
(73) Proprietor: LG Chem, Ltd., Seoul 150-721 (KR)
(72) Inventor: KIM, Dong-Su, Daejeon 305-738 (KR); OH, Jae-Seung, Daejeon 305-738 (KR); PARK, Jung-Bae, Daejeon 305-738 (KR); LEE, Byoung-Bae, Daejeon 305-738 (KR); HONG,Yeon-Suk, Daejeon 305-738 (KR); LEE, Hyo-Jin, Daejeon 305-738 (KR); SHIM, You-Jin, Daejeon 305-738 (KR)
(74) Representative: Goddar, Heinz J.
(86) International application number: PCT/KR2014/010138
(87) International publication number: WO 2015/060697

(56) References cited:
- CN-A- 103 107 368
- JP-A- H10 189 042
- JP-A- 2004 022 523
- KR-A- 20010 095 509
- KR-A- 20080 011 138
- KR-A- 20090 076 314
- KR-A- 20120 011 209
- KR-A- 20130 043 221
- US-A1- 2011 117 422
- US-A1- 2013 171 514

## Description

### TECHNICAL FIELD

The present disclosure relates to a non-aqueous electrolyte solution, which has high thermal and chemical stability, thereby improving the stability of a battery at room temperature and a high temperature and maintaining good charge/discharge performances at a high temperature, and a lithium secondary battery having the same.

### BACKGROUND ART

Recently, there has been growing interest in energy storage technologies. As energy storage technologies are extended to devices such as cellular phones, camcorders and notebook PC, and further to electric vehicles, demand for high energy density of batteries used as a source of power supply of such devices is increasing. Therefore, research and development of lithium secondary batteries, which most meet the demand, are actively being conducted.

Conventionally, the lithium secondary batteries have an anode made of a carbon material or a lithium-metal alloy, a cathode made of a lithium-metal oxide, and an electrolyte in which a lithium salt is dissolved in an organic solvent. The lithium-metal oxide is affected by the intercalation and disintercalation of lithium ions to determine the structural stability and capacity thereof. As a charge potential is raised, the capacity increases but the lithium-metal oxide becomes unstable structurally. Such instability of an electrode structure results in oxygen generation to cause overheating of the batteries, as well as explosion of the batteries due to reaction with the electrolyte.

As the organic solvent which has been conventionally used in the electrolyte of the lithium secondary batteries, ethylene carbonate, propylene carbonate, dimethoxy ethane, g-butyrolacone (GBL), N,N-dimethyl formamide, teterahydrofurane or acetonitrile may be mentioned. However, these solvents causes the swelling of batteries by side reactions with an electrode at a high temperature, so lithium secondary batteries using these solvents have the problem of stability, particularly stability at a high temperature.

In order to solve this problem, an ionic liquid having imidazolium and ammonium cations has been proposed as the electrolyte of a lithium secondary battery. However, the ionic liquid may be reduced at a voltage higher than that of lithium ions, or the imidazolium and ammonium cations may be intercalated together with lithium ions in an anode, thereby deteriorating battery performances.

Meanwhile, the electrolyte used in a lithium secondary battery forms a kind of a solid electrolyte interface (SEI) layer on the surface of an anode by reaction with carbon composing the anode during initial charging. The SEI layer formed functions as an ion tunnel to prevent the organic solvent from being inserted in the anode structure and allow only lithium ions to selectively pass through, thereby preventing the destroy of the anode structure and greatly affecting battery stability.

Such an SEI layer is known to depend on solvents used as an electrolyte or additives in its property and stability. Therefore, there is a need for developing an electrolyte composition capable of forming an SEI layer having high stability and good performance.

US 2011/117422 A1 discloses a non-aqueous electrolyte solution for a lithium secondary battery according to the preamble of claim 1.

### DISCLOSURE

### Technical Problem

The present disclosure is designed to solve the above problems, and therefore it is an object of the present disclosure to provide a non-aqueous electrolyte solution having high thermal and chemical stability, and a lithium secondary battery comprising the same.

Another object of the present disclosure is to provide a non-aqueous electrolyte solution capable of forming a more stable SEI layer.

### Technical Solution

In order to accomplish the above object, the non-aqueous electrolyte solution of the present disclosure comprises an amide compound of formula (I); an ionizable lithium salt; and an organic solvent: 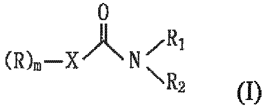
wherein R, R₁ and R₂ are each independently any one selected from the group consisting of hydrogen, halogen, C₁₋₂₀ alkyl, alkylamine, alkoxy, alkoxyalkyl, alkenyl and aryl groups, and at least one of R₁ and R₂ is represented by CH₃-(CH₂)p-O-(CH₂)q-where p is an integer of 0 to 8 and q is an integer of 1 to 8,
X is any one selected from the group consisting of carbon, silicon, oxygen, nitrogen, phosphorus, sulfur and hydrogen, in which i) m is 0 when X is hydrogen, ii) m is 1 when X is oxygen or sulfur, iii) m is 2 when X is nitrogen or phosphorus, and iv) m is 3 when X is carbon or silicon,
wherein the non-aqueous electrolyte solution comprises a cyclic sulfate,
wherein the cyclic sulfate is present in an amount of 0.01 to 10 parts by weight based on 100 parts by weight of the total weight of the non-aqueous electrolyte solution, and
wherein the cyclic sulfate is present in an amount of 1 to 20 parts by weight based on 100 parts by weight of the amide compound.

In the present disclosure, the amide compound may be any one selected from N-methoxyethyl methylcarbamate, N-methoxyethyl-N-methyl methyl carbamate, N-methoxymethyl-N-methyl methylcarbamate, N-methyl-N-methoxyethyl methoxyethyl carbamate, N-methyl-N-methoxyethyl methoxymethyl carbamate, and a mixture thereof.

In the present disclosure, the cyclic sulfate may be represented by formula (II): 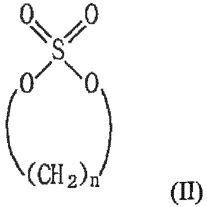 wherein n is an integer of 1 to 10.

In the non-aqueous electrolyte solution of the present disclosure, the cyclic sulfate may be any one selected from 1,3-propanediol cyclic sulfate, 1,3-butanediol cyclic sulfate, 1,3-pentanediol cyclic sulfate, 1,3-hexanediol cyclic sulfate, and a mixture thereof.

The cyclic sulfate is present in an amount of 0.01 to 10 parts by weight based on 100 parts by weight of the non-aqueous electrolyte solution.

The cyclic sulfate is present in an amount of 1 to 20 parts by weight based on 100 parts by weight of the amide compound.

The amide compound according to the present disclosure may be taken together with a lithium salt to form a eutectic mixture, and the molet ratio of the amide compound and the lithium salt may range from 1:1 to 8:1 so as to obtain sufficient ionic conductivity of the non-aqueous electrolyte solution.

In the non-aqueous electrolyte solution of the present disclosure, the lithium salt may have an anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte solution of the present disclosure, the organic solvent may be any one selected from ethylene carbonate, propylene carbonate, 1,2-butylene carbonate, 2,3-butylene carbonate, 1,2-pentylene carbonate, 2,3-pentylene carbonate, dimethyl carbonate, diethyl carbonate, dipropyl carbonate, ethyl methyl carbonate, methyl propyl carbonate, ethyl propyl carbonate, dimethyl ether, diethyl ether, dipropyl ether, methyl ethyl ether, methyl propyl ether, ethyl propyl ether, methyl acetate, ethyl acetate, propyl acetate, methyl propionate, ethyl propionate, γ-butyrolactone, γ-valerolactone, γ-caprolactone, α-valerolactone, ε-caprolactone and a mixture thereof.

Also, the non-aqueous electrolyte solution of the present disclosure may be instantly used as a liquid electrolyte, or may be used together with a polymer as a polymer electrolyte in the form of solid or gel. The polymer electrolyte may be a gel polymer electrolyte formed by the polymerization of a precursor solution containing monomers that can form a polymer by reaction with the non-aqueous electrolyte solution, or may be the form that the non-aqueous electrolyte solution is immersed in the polymer.

The above-mentioned electrolyte solution of the present disclosure can be effectively used in an electrochemical device, such as a lithium secondary battery.

### Advantageous Effects

The electrolyte solution according to the present disclosure provides the following effects.

Firstly, the non-aqueous electrolyte solution of the present disclosure has good thermal and chemical stability to greatly improve the problems including the evaporation, ignition and side reactions of conventional electrolyte solutions due to the use of an organic solvent.

Secondly, the non-aqueous electrolyte solution of the present disclosure comprises a cyclic sulfate that can form a stable SEI layer, thereby providing good charge/discharge performances even at a high temperature and preventing the generation of swelling.

### DESCRIPTION OF DRAWINGS

The accompanying drawings illustrate preferred embodiments of the present disclosure and, together with the foregoing disclosure, serve to provide further understanding of the present disclosure. However, the present disclosure is not to be construed as being limited to the drawings.

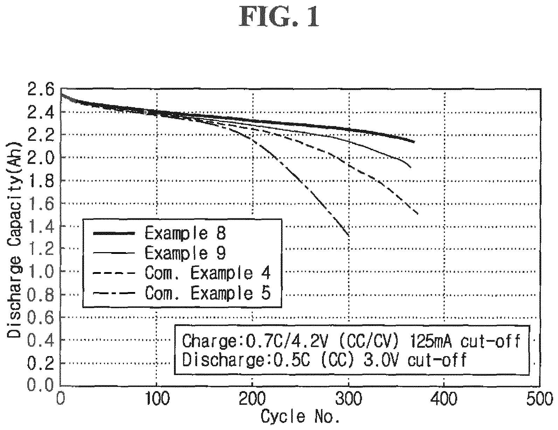

FIG. 1 is a graph showing discharge capacity over the cycles of each battery prepared in Examples 8-9 and Comparative Examples 4-5.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The non-aqueous electrolyte solution of the present disclosure comprises an amide compound of formula (I); an ionizable lithium salt; and an organic solvent: 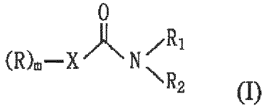
wherein R, R₁ and R₂ are each independently any one selected from the group consisting of hydrogen, halogen, C₁₋₂₀ alkyl, alkylamine, alkoxy, alkoxyalkyl, alkenyl and aryl groups, and at least one of R₁ and R₂ is represented by CH₃-(CH₂)p-O-(CH₂)q-where p is an integer of 0 to 8 and q is an integer of 1 to 8,
X is any one selected from the group consisting of carbon, silicon, oxygen, nitrogen, phosphorus, sulfur and hydrogen, in which i) m is 0 when X is hydrogen, ii) m is 1 when X is oxygen or sulfur, iii) m is 2 when X is nitrogen or phosphorus, and iv) m is 3 when X is carbon or silicon,
wherein the non-aqueous electrolyte solution comprises a cyclic sulfate,
wherein the cyclic sulfate is present in an amount of 0.01 to 10 parts by weight based on 100 parts by weight of the total weight of the non-aqueous electrolyte solution, and
wherein the cyclic sulfate is present in an amount of 1 to 20 parts by weight based on 100 parts by weight of the amide compound.

Electrochemical devices are often heated or exposed to a high temperature, and thus the high-temperature stability thereof is very important.

The present inventors have endeavored to provide stability in a battery and found that the above-mentioned structure of amide compound is used together with a lithium salt to form an electrolyte to provide high thermal and chemical stability, on the contrary to organic solvents used in a conventional non-aqueous electrolyte solution. Preferably, the electrolyte solution of the present disclosure exhibits a lower viscosity and high stability at a high temperature and a low value for the lower limit of electrochemical windows, as compared with a eutectic mixture of a lithium salt and the known amide compound such as acetamide, methyl carbamate and the like. Accordingly, the electrolyte containing the amide of the present disclosure and a lithium salt can improve the high-temperature stability of a secondary battery and can be effectively used as an electrolyte solution for a secondary battery which applies various electrode materials.

The amide compound which may be used in the electrolyte solution of the present disclosure include any one selected from N-methoxyethyl methylcarbamate, N-methoxyethyl-N-methyl methyl carbamate, N-methoxymethyl-N-methyl methylcarbamate, N-methyl-N-methoxyethyl methoxyethyl carbamate, N-methyl-N-methoxyethyl methoxymethyl carbamate, and a mixture thereof, but is not limited thereto.

Also, in the electrolyte solution of the present disclosure, the above-mentioned lithium salt may be represented by Li⁺X⁻ as an ionizable lithium salt. As the anion of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be mentioned, but are not limited thereto.

In the non-aqueous electrolyte solution of the present disclosure, the amide and the lithium salt may be present in a mole ratio of 1:1 to 8:1, preferable 2:1 to 6:1, so as to obtain sufficient ionic conductivity of the non-aqueous electrolyte solution.

Also, the non-aqueous electrolyte solution of the present disclosure comprises a cyclic sulfate, as mentioned above.

Since the amide compound used in the present disclosure has relatively high viscosity and high bonding force with lithium ions, the transfer of lithium ions at the interface between electrodes is more limited depending on the nature of an SEI layer. Therefore, it is important to select an additive for forming an SEI layer for the purpose of improving resistance at the interface and the initial capacity. The present inventors have solved the problem by using the cyclic sulfate together with the amide compound according to the present disclosure.

Furthermore, the cyclic sulfate according to the present disclosure forms an SEI layer more densely and stably on the surface of an anode during initial charging. Accordingly, while the battery is continuously charged and discharged under the high-temperature condition, the decomposition of the electrolyte solution by side reactions and the irreversible increase of capacity can be prevented, thereby improving the high-temperature stability of the battery without deteriorating the long-term charging/discharging efficiency and performances of the battery.

The cyclic sulfate according to the present disclosure may, for example, be represented by formula (II): 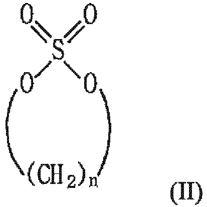 wherein n is an integer of 1 to 10, preferably 1 to 8, more preferably 2 to 6. If n exceeds 10, the structure of the cyclic sulfate becomes unstable, thereby failing to form a stable SEI layer.

Specific examples of the cyclic sulfate represented by formula (II) may include 1,3-propanediol cyclic sulfate, 1,3-butanediol cyclic sulfate, 1,3-pentanediol cyclic sulfate, 1,3-hexanediol cyclic sulfate, and a mixture thereof.

The cyclic sulfate is present in an amount of 0.01 to 10 parts by weight based on 100 parts by weight of the non-aqueous electrolyte solution.

Also, the cyclic sulfate is present in an amount of 1 to 20 parts by weight, preferably 1 to 10 parts by weight, more preferably 1.5 to 6 parts by weight, based on 100 parts by weight of the amide compound.

When the cyclic sulfate satisfies such content range, it can form an SEI layer more densely and stably on the surface of an anode during initial charging in spite of high bonding force of the amide compound with lithium ions, thereby allowing good transfer of lithium ions and improving the interface resistance and the initial capacity.

In addition, the non-aqueous electrolyte solution of the present disclosure comprises an organic solvent. The organic solvent which may be used in the non-aqueous electrolyte solution of the present disclosure may any one which has been conventionally used in the non-aqueous electrolyte solution of a lithium secondary battery. Examples of the organic solvent may include ethylene carbonate, propylene carbonate, 1,2-butylene carbonate, 2,3-butylene carbonate, 1,2-pentylene carbonate, 2,3-pentylene carbonate, dimethyl carbonate, diethyl carbonate, dipropyl carbonate, ethyl methyl carbonate, methyl propyl carbonate, ethyl propyl carbonate, dimethyl ether, diethyl ether, dipropyl ether, methyl ethyl ether, methyl propyl ether, ethyl propyl ether, methyl acetate, ethyl acetate, propyl acetate, methyl propionate, ethyl propionate, γ-butyrolactone, γ-valerolactone, γ-caprolactone, σ-valerolactone, ε-caprolactone and a mixture thereof.

In the present disclosure, the organic solvent is preferably present in an amount of 5 to 200 parts by weight based on 100 parts by weight of the amide compound in terms of lowering viscosity and improving ionic conductivity as well as preventing the thermal stability of the amide compound from being deteriorated.

The electrolyte solution of the present disclosure may be applied irrespective of its forms. For example, it may be applied in the form of solid as a polymer itself, or in the form of gel as a polymer electrolyte.

When the electrolyte solution of the present disclosure is a polymer electrolyte, it may be prepared in the form of a gel polymer electrolyte by the polymerization of a precursor solution containing monomers that can form a polymer by reaction with the non-aqueous electrolyte solution or in the form that the non-aqueous electrolyte solution is immersed in a solid- or gel-type polymer.

Alternatively, the polymer electrolyte of the present disclosure may be prepared by dissolving the electrolyte and a polymer in a solvent, followed by removing the solvent to form the polymer electrolyte, in which the electrolyte is in the form of being contained in the polymer matrix.

The above-mentioned non-aqueous electrolyte solution of the present disclosure is introduced in an electrode assembly consisting of a cathode, an anode and a separator interposed therebetween to prepare a lithium secondary battery. The cathode, anode and separator composing the electrode assembly may be any one which is conventionally used in the preparation of a lithium secondary battery.

As the active material of the cathode, a lithium-containing transition metal oxide may be preferably used, for example, any one selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3), LixFePO₄(0.5<x<1.3) and a mixture thereof may be used. The lithium-containing transition metal oxide may be coated with a metal such as aluminum (Al) and a metal oxide. In addition, a sulfide, selenide or halide of the lithium-containing transition metal may also be used.

As the active material of the anode, a carbon-based material, metallic lithium, silicon or tin which can conventionally intercalate and disintercalate lithium ions may be used. Also, a metal oxide, such as TiO₂ and SnO₂, which has a potential to lithium less than 2V may be used. Among these, the carbon-based material is preferred. The carbon-based material may be low-crystalline carbon or high-crystalline carbon. Representative examples of the low-crystalline carbon include soft carbon and hard carbon, and representative examples of the high-crystalline carbon include natural graphite, Kish graphite, pyrolytic carbon, mesophase pitch based carbon fiber, meso-carbon microbeads, mesophase pitches, and high-temperature sintered carbon such as petroleum or coal tar pitch derived cokes.

The cathode and/or the anode may comprise a binder. For example, organic binders including vinylidene fluoride-hexafluoropropylene copolymer (PVDF-co-HFP), polyvinylidene fluoride, polyacrylonitrile, polymethylmethacrylate, and water-based binders such as styrene butadiene rubber (SBR) may be used together with thickners such as carboxymethyl cellulose (CMC).

Also, the separator may be obtained from a porous polymer film which is conventionally used alone or in the form of lamination in conventional separators, for example, porous polymer films made of polyolefin-based polymers such as ethylene homopolymer, propylene homopolymer, ethylene/butene copolymer, ethylene/hexene copolymer and ethylene/methacrylate copolymer. Also, as the separator, conventional porous non-woven fabrics such as a non-woven fabric made of glass fiber having a high melt point or polyethylene terephthalate fiber may be used, but is not limited thereto.

The lithium secondary battery of the present disclosure is not limited to its shape, but may be a cylindrical shape using a can, an angled shape, a pouch shape or a coin shape.

Hereinafter, the present disclosure will be explained in more detail with reference to the following Examples. However, it should be understood that the Examples are provided for the purpose of illustrations only and to better explain to a person having ordinary skill in the art, and is not intended to limit the scope of the present disclosure, so modifications could be made thereto without departing from the scope of the present disclosure.

### <Preparation of Non-aqueous Electrolyte Solution>

### Example 1

41g of N-methoxyethyl-N-methyl methyl carbamate and 20g of LiPF₆ were put in a round-bottom flask and slowly stirred under nitrogen atmosphere for 2 hours, and 17g of ethyl methyl carbonate was further added to obtain 78g of a mixture of an amide compound, a lithium salt and an organic solvent. Based on 100 parts by weight of the resulting mixture, 1.0 part by weight of 1,3-propanediol cyclic sulfate was added to the resulting mixture, following by stirring, to obtain a non-aqueous electrolyte solution. As a result, the amount of 1,3-propanediol cyclic sulfate was about 0.99 parts by weight based on 100 parts by weight of the non-aqueous electrolyte solution and the amount thereof was about 1.90 parts by weight based on 100 parts by weight of N-methoxyethyl-N-methyl methyl carbamate.

### Example 2

The procedure of Example 1 was repeated except that 3.0 parts by weight of 1,3-propanediol cyclic sulfate was added to obtain a non-aqueous electrolyte solution. As a result, the amount of 1,3-propanediol cyclic sulfate was about 2.91 parts by weight based on 100 parts by weight of the non-aqueous electrolyte solution and the amount thereof was about 5.70 parts by weight based on 100 parts by weight of N-methoxyethyl-N-methyl methyl carbamate.

### Example 3

The procedure of Example 1 was repeated except that 5.0 parts by weight of 1,3-propanediol cyclic sulfate was added to obtain a non-aqueous electrolyte solution. As a result, the amount of 1,3-propanediol cyclic sulfate was about 4.76 parts by weight based on 100 parts by weight of the non-aqueous electrolyte solution and the amount thereof was about 9.51 parts by weight based on 100 parts by weight of N-methoxyethyl-N-methyl methyl carbamate.

### Example 4

The procedure of Example 1 was repeated except that 10.0 parts by weight of 1,3-propanediol cyclic sulfate was added to obtain a non-aqueous electrolyte solution. As a result, the amount of 1,3-propanediol cyclic sulfate was about 9.09 parts by weight based on 100 parts by weight of the non-aqueous electrolyte solution and the amount thereof was about 19.02 parts by weight based on 100 parts by weight of N-methoxyethyl-N-methyl methyl carbamate.

### Example 5

The procedure of Example 1 was repeated except that 3.0 parts by weight of 1,3-butanediol cyclic sulfate was added, instead of 1,3-propanediol cyclic sulfate, to obtain a non-aqueous electrolyte solution. As a result, the amount of 1,3-butanediol cyclic sulfate was about 2.91 parts by weight based on 100 parts by weight of the non-aqueous electrolyte solution and the amount thereof was about 5.70 parts by weight based on 100 parts by weight of N-methoxyethyl-N-methyl methyl carbamate.

### Example 6

The procedure of Example 1 was repeated except that 3.0 parts by weight of 1,3-pentanediol cyclic sulfate was added, instead of 1,3-propanediol cyclic sulfate, to obtain a non-aqueous electrolyte solution. As a result, the amount of 1,3-pentanediol cyclic sulfate was about 2.91 parts by weight based on 100 parts by weight of the non-aqueous electrolyte solution and the amount thereof was about 5.70 parts by weight based on 100 parts by weight of N-methoxyethyl-N-methyl methyl carbamate.

### Example 7

The procedure of Example 1 was repeated except that 3.0 parts by weight of 1,3-hexanediol cyclic sulfate was added, instead of 1,3-propanediol cyclic sulfate, to obtain a non-aqueous electrolyte solution. As a result, the amount of 1,3-hexanediol cyclic sulfate was about 2.91 parts by weight based on 100 parts by weight of the non-aqueous electrolyte solution and the amount thereof was about 5.70 parts by weight based on 100 parts by weight of N-methoxyethyl-N-methyl methyl carbamate.

### Comparative Example 1

The procedure of Example 1 was repeated except that 1,3-propanediol cyclic sulfate was not added to obtain a non-aqueous electrolyte solution.

### Comparative Example 2

4.2 g of ethylene carbonate and 6.3 g of ethyl methyl carbonate were mixed and 1.5g of LiPF₆ was added thereto, to obtain a non-aqueous electrolyte solution of 1M LiPF₆.

### Comparative Example 3

3.8 g of purified acetamide and 6 g of LiTFSI were put in a round-bottom flask and slowly stirred under nitrogen atmosphere for 2 hours, to obtain 9.8g of a eutectic mixture as an electrolyte.

### Experimental Example: Evaluation of Electrolyte Properties

### 1. Viscosity and Ionic conductivity

The electrolyte solution obtained in the Examples and the Comparative Examples were evaluated for the following properties.

Specifically, the amide compound-containing electrolyte solutions of Examples 1 to 7 and the electrolyte solutions of Comparative Examples 1 and 3 were used as a sample, and the viscosity thereof was measured at 25 °C using the RS150 viscometer and the conductivity thereof was measured using the Inolab 740 set. The results thereof are shown in Table 1.

**Table 1**

| | Viscosity cP) | Conductivity (mS/cm) |
|---|---|---|
| Example 1 | 7.5 | 7.8 |
| Example 2 | 7.1 | 9.4 |
| Example 3 | 8.8 | 9.2 |
| Example 4 | 12.6 | 8.8 |
| Example 5 | 8.7 | 9.5 |
| Example 6 | 9.3 | 8.2 |
| Example 7 | 11.2 | 7.9 |
| Comparative Example 1 | 7.4 | 7.1 |
| Comparative Example 3 | 100.0 | 1.1 |

From Table 1, the electrolyte solution of the present invention exhibited great improvement in viscosity and conductivity, as compared with the conventional eutectic mixture electrolyte obtained in Comparative Example 3.

Also, comparing Example 1 with Comparative Example 1, the electrolyte solution having a cyclic sulfate of Example 1 exhibited more improved ionic conductivity over Comparative Example 1.

### 2. Potential Window

The electrolyte solution of Example 2 and Comparative Examples 1 and 3 were measured for their potential window using the BiStat potentiostat. The results thereof are shown in Table 2.

**Table 2**

| | Example 2 | Comparative Example 1 | Comparative Example 2 |
|---|---|---|---|
| Potential Window (V) | 0.45∼4.5 | 0.5∼4.55 | 0.7∼4.9 |

From Table 2, the electrolyte solution of Example 2 according to the present invention exhibited a lower reduction potential, as compared with the conventional eutectic mixture electrolyte obtained in Comparative Example 3.

Also, comparing Example 2 with Comparative Example 1, the oxidation/reduction potential thereof was not greatly varied by the addition of a cyclic sulfate.

### <Preparation of Battery>

### Example 8

LiCoO₂ as a cathode active material, artificial graphite as a conductive material, and polyvinylidene fluoride (PVdF) as a binder were mixed in a weight ratio of 93:4:4, and N-methyl-2-pyrrolidone was dispersed therein, to obtain a cathode slurry. The slurry was coated on an aluminum foil and dried at 130 °C for 2 hours, to obtain a cathode.

Also, artificial graphite as an anode active material, polyvinylidene fluoride (PVdF) as a binder, and carbon black as a conductive material were mixed in a weight ratio of 94:3:3, to which N-methylpyrrolidone was added, to obtain a slurry. The slurry was coated on a copper foil and dried at 130 °C for 2 hours, to obtain an anode.

Then, 2600 mAh of the cathode and the anode thus obtained were used together with a porous separator to form a cylindrical battery by a conventional method, and the electrolyte solution of Example 2 was introduced therein, to finally prepare a battery.

### Example 9

The procedure of Example 8 was repeated except that the electrolyte solution of Example 4 was used to prepare a battery.

### Comparative Example 4

The procedure of Example 8 was repeated except that the electrolyte solution of Comparative Example 1 was used to prepare a battery.

### Comparative Example 5

The procedure of Example 8 was repeated except that the electrolyte solution of Comparative Example 3 was used to prepare a battery.

### Experimental Example: Evaluation of Charge/Discharge Performances

Each battery prepared in Examples 8 and 9 and Comparative Examples 4 and 5 were charged at 55 °C with a current of 0.7 C up to 4.2 V and discharged with a current of 0.5 C up to 3.0 V to measure the discharge capacity and charge/discharge efficiency thereof over cycles. The results thereof are shown in Table 3 and FIG. 1.

**Table 3**

| Cycles | 50 | 100 | 200 | 300 |
|---|---|---|---|---|
| Example 8 | 95.6% | 93.7% | 90.0% | 87.1% |
| Example 9 | 94.9% | 93.2% | 83.3% | 82.7% |
| Comparative Example 4 | 93.8% | 92.8% | 874% | 75.0% |
| Comparative Example 5 | 94.0% | 91.5% | 83.3% | 5 1.2% |

As can be seen from Table 3 and FIG. 1, the batteries of Examples 8 and 9 maintained a discharge capacity of 80% or higher relative to the initial value even after 300 cycles, whereas the batteries of Comparative Examples 4 and 5 exhibited a very lower discharge capacity.

### Experimental Example: Evaluation of High-Temperature Stability

The battery (Example 10) prepared by introducing 2.3 g of the electrolyte solution of Example 2 in a commercial pouch-type battery, the battery (Comparative Example 6) prepared by introducing the same amount of the electrolyte solution of Comparative Example 1, and the battery (Comparative Example 7) prepared by introducing the same amount of the electrolyte solution of Comparative Example 2 were each fully charged up to 4.2 V, and left at 90 °C for 4 hours. Then, each battery was measured for its thickness change at room temperature, and the results thereof are shown in Table 4.

**Table 4**

| | Initial Thickness (mm) | Later Thickness (mm) | Increase rate (%) |
|---|---|---|---|
| Example 10 | 3.85 | 3.91 | 1.6 |
| Comparative Example 6 | 13.86 | 4.12 | 6.7 |
| Comparative Example 7 | 3.85 | 4.53 | 17.7 |

From Table 4, Example 10 using a cyclic sulfate according to the present disclosure exhibited substantial improvement in swelling phenomenon during high-temperature storage, as compared with Comparative Example 6 using no cyclic sulfate and Comparative Example 1 using a conventional carbonate electrolyte.

## Claims

1. A non-aqueous electrolyte solution for a lithium secondary battery, comprising:
an amide compound of formula (I);
an ionizable lithium salt; and
an organic solvent: 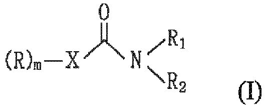
wherein R, R₁ and R₂ are each independently any one selected from the group consisting of hydrogen, halogen, C₁₋₂₀ alkyl, alkylamine, alkoxy, alkoxyalkyl, alkenyl and aryl groups, and at least one of R₁ and R₂ is represented by CH₃-(CH₂)p-O-(CH₂)q-where p is an integer of 0 to 8 and q is an integer of 1 to 8, and
X is any one selected from the group consisting of carbon, silicon, oxygen, nitrogen, phosphorus, sulfur and hydrogen, in which i) m is 0 when X is hydrogen, ii) m is 1 when X is oxygen or sulfur, iii) m is 2 when X is nitrogen or phosphorus, and iv) m is 3 when X is carbon or silicon **characterized in that** the non-aqueous electrolyte solution comprises a cyclic sulfate,
wherein the cyclic sulfate is present in an amount of 0.01 to 10 parts by weight based on 100 parts by weight of the total weight of the non-aqueous electrolyte solution, and
wherein the cyclic sulfate is present in an amount of 1 to 20 parts by weight based on 100 parts by weight of the amide compound.

2. The non-aqueous electrolyte solution for a lithium secondary battery according to claim 1, wherein the amide compound is any one selected from N-methoxyethyl methylcarbamate, N-methoxyethyl-N-methyl methyl carbamate, N-methoxymethyl-N-methyl methylcarbamate, N-methyl-N-methoxyethyl methoxyethyl carbamate, N-methyl-N-methoxyethyl methoxymethyl carbamate, and a mixture thereof.

3. The non-aqueous electrolyte solution for a lithium secondary battery according to claim 1, wherein the cyclic sulfate is represented by formula (II): 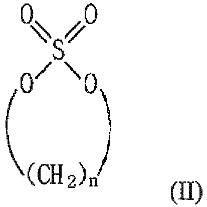 wherein n is an integer of 1 to 10.

4. The non-aqueous electrolyte solution for a lithium secondary battery according to claim 1, wherein the cyclic sulfate is any one selected from 1,3-propanediol cyclic sulfate, 1,3-butanediol cyclic sulfate, 1,3-pentanediol cyclic sulfate, 1,3-hexanediol cyclic sulfate, and a mixture thereof.

5. The non-aqueous electrolyte solution for a lithium secondary battery according to claim 1, wherein the lithium salt has an anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN- and (CF₃CF₂SO₂)₂N⁻.

6. The non-aqueous electrolyte solution for a lithium secondary battery according to claim 1, wherein the amide compound and the lithium salt form a eutectic mixture.

7. The non-aqueous electrolyte solution for a lithium secondary battery according to claim 1, wherein the mole ratio of the amide compound and the lithium salt ranges from 1:1 to 8:1.

8. The non-aqueous electrolyte solution for a lithium secondary battery according to claim 1, wherein the organic solvent is any one selected from ethylene carbonate, propylene carbonate, 1,2-butylene carbonate, 2,3-butylene carbonate, 1,2-pentylene carbonate, 2,3-pentylene carbonate, dimethyl carbonate, diethyl carbonate, dipropyl carbonate, ethyl methyl carbonate, methyl propyl carbonate, ethyl propyl carbonate, dimethyl ether, diethyl ether, dipropyl ether, methyl ethyl ether, methyl propyl ether, ethyl propyl ether, methyl acetate, ethyl acetate, propyl acetate, methyl propionate, ethyl propionate, γ-butyrolactone, γ-valerolactone, γ-caprolactone, σ-valerolactone, ε-caprolactone and a mixture thereof.

9. The non-aqueous electrolyte solution for a lithium secondary battery according to claim 1, wherein the organic solvent is present in an amount of 5 to 200 parts by weight based on 100 parts by weight of the amide compound.

10. The non-aqueous electrolyte solution for a lithium secondary battery according to claim 1, which is used as a polymer electrolyte.

11. A lithium secondary battery, comprising a cathode, an anode, and the non-aqueous electrolyte solution of any one of claims 1 to 10.

## Patentansprüche

1. Nicht-wässrige Elektrolylösung für eine Lithiumsekundärbatterie, umfassend:
eine Amidverbindung nach Formel (I);
ein ionisierbares Lithiumsalz; und
ein organisches Lösungsmittel: 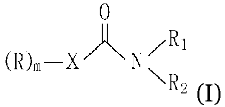
wobei R, R₁ und R₂ jeweils unabhängig irgendeines ausgewählt aus der Gruppe bestehend aus Wasserstoff, Halogen, C₁₋₂₀-Alkyl, Alkyl, Alkylamin, Alkoxy, Alkoxyalkyl, Alkenyl und Aryl sind, und wobei wenigstens eines von R₁ und R₂ dargestellt ist durch CH₃-(CH₂)p-O-(CH₂)q- wobei p eine ganze Zahl von o bis 8 ist und q eine ganze Zahl von 1 bis 8 ist, und
X irgendeines ist ausgewählt aus der Gruppe bestehend aus Kohlenstoff, Silizium, Sauerstoff, Stickstoff, Phosphor, Schwefel und Wasserstoff, wobei i) m o ist, wenn X Wasserstoff ist, ii) m 1 ist, wenn X Sauerstoff oder Schwefel ist, iii) m 2 ist, wenn X Stickstoff oder Phosphor ist und iv) m 3 ist, wenn X Kohlenstoff oder Silizium ist, **dadurch gekennzeichnet, dass** die nicht-wässrige Elektrolytlösung ein cyclisches Sulfat umfasst,
wobei das cyclische Sulfat in einer Menge von 0.01 bis 10 Gewichtsteilen, basierend auf 100 Gewichtsteilen des Gesamtgewichts der nicht-wässrigen Elektrolytlösung, vorhanden ist, und
wobei das cyclische Sulfat in einer Menge von 1 bis 20 Gewichtsteilen, basierend auf 100 Gewichtsteilen der Amidverbindung, vorhanden ist.

2. Nicht-wässrige Elektrolytlösung für eine Lithiumsekundärbatterie nach Anspruch 1, wobei die Amidverbindung irgendeine ist, ausgewählt aus N-Methoxyethyl-methylcarbamat, N-Methoxyethyl-N-methylmethylcarbamat, N-Methoxymethyl-N-methylmethylcarbamat, N-Methyl-N-Methoxyethylmethoxyethylcarbamat, N-Methyl-N-Methoxyethylmethoxymethylcarbamat und einer Mischung derselben.

3. Nicht-wässrige Elektrolytlösung für eine Lithiumsekundärbatterie nach Anspruch 1, wobei das cyclische Sulfat dargestellt ist durch Formel (II): 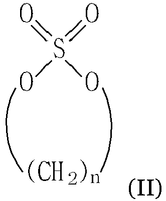 wobei n eine ganze Zahl von 1 to 10 ist.

4. Nicht-wässrige Elektrolytlösung für eine Lithiumsekundärbatterie nach Anspruch 1, wobei das cyclische Sulfat irgendeines ist, ausgewählt aus cyclischem 1,3-Propandiolsulfat, cyclischem 1,3-Butandiolsulfat, cyclischem 1,3-Pentandiolsulfat, cyclischem 1,3-Hexandiolsulfat und einer Mischung derselben.

5. Nicht-wässrige Elektrolytlösung für eine Lithiumsekundärbatterie nach Anspruch 1, wobei das Lithiumsalz ein Anion aufweist, das ausgewählt ist aus der Gruppe bestehend aus F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CFSO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃-, CF₃CO₂⁻, CH₃CO₂⁻, SCN⁻ und (CF₃CF₂SO₂)₂N⁻.

6. Nicht-wässrige Elektrolytlösung für eine Lithiumsekundärbatterie nach Anspruch 1, wobei die Amidverbindung und das Lithiumsalz eine eutektische Mischung bilden.

7. Nicht-wässrige Elektrolytlösung für eine Lithiumsekundärbatterie nach Anspruch 1, wobei das Molverhältnis der Amidverbindung und des Lithiumsalzes von 1:1 bis 8:1 reicht.

8. Nicht-wässrige Elektrolytlösung für eine Lithiumsekundärbatterie nach Anspruch 1, wobei das organische Lösungsmittel irgendeines ist, ausgewählt aus Ethylencarbonat, Propylencarbonat, 1,2-Butylencarbonat, 2,3-Butylencarbonat, 1,2-Pentylencarbonat, 2,3-Pentylencarbonat, Dimethylcarbonat, Diethylcarbonat, Dipropylcarbonat, Ethylmethylcarbonat, Methylpropylcarbonat, Ethylpropylcarbonat, Dimethylether, Diethylether, Dipropylether, Methylethylether, Methylpropylether, Ethylpropylether, Methylacetat, Ethylacetat, Propylacetat, Methylpropionat, Ethylpropionat, γ-Butyrolacton, γ-Valerolacton, γ-Caprolacton, σ-Valerolacton, ε-Caprolacton und einer Mischung derselben.

9. Nicht-wässrige Elektrolytlösung für eine Lithiumsekundärbatterie nach Anspruch 1, wobei das organische Lösungsmittel in einer Menge von 5 bis 200 Gewichtsteilen, basierend auf 100 Gewichtsteilen der Amidverbindung, vorhanden ist.

10. Nicht-wässrige Elektrolytlösung für eine Lithiumsekundärbatterie nach Anspruch 1, die als ein Polymerelektrolyt verwendet wird.

11. Lithiumsekundärbatterie, umfassend eine Kathode, eine Anode und die nicht-wässrige Elektrolytlösung nach einem der Ansprüche 1 bis 10.

## Revendications

1. Solution électrolytique non aqueuse pour une batterie secondaire du lithium, comprenant :
un composé amide de la formule (I) ;
un sel de lithium ionisable ; et
un solvant organique ; 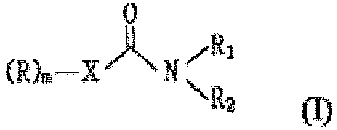
dans laquelle R, R₁ et R₂ représentent chacun indépendamment un composé quelconque sélectionné dans le groupe constitué d'hydrogène, d'halogène, d'un alkyle en C₁ à C₂₀, d'alkylamine, d'alcoxy, d'alcoxyalkyle, de groupes alcényle et aryle, et au moins un de R₁ à R₂ est représenté par CH₃-(CH₂)p-O-(CH₂)q- où p désigne un nombre entier valant de 0 à 8 et q désigne un nombre entier valant de 1 à 8, et
X représente un composé quelconque sélectionné dans le groupe constitué de carbone, de silicium, d'oxygène, d'azote, de phosphore, de soufre et d'hydrogène, dans lequel i) m vaut 0 lorsque X représente l'hydrogène, ii) m vaut 1 lorsque X représente l'oxygène ou le soufre, iii), m vaut 2 lorsque X représente l'azote ou le phosphore, et iv) m vaut 3 lorsque X représente le carbone ou le silice **caractérisé en ce que** la solution électrolytique non aqueuse comprend un sulfate cyclique,
dans laquelle le sulfate cyclique est présent en une quantité de 0,01 à 10 parties en poids par rapport à 100 parties en poids du poids total de la solution électrolytique non aqueuse, et
dans laquelle le sulfate cyclique est présent en une quantité de 1 à 20 parties en poids par rapport à 100 parties en poids du composé amide.

2. Solution électrolytique non aqueuse pour une batterie secondaire au lithium selon la revendication 1, dans laquelle le composé amide est un composé quelconque sélectionné parmi le méthylcarbamate de N-méthoxyéthyle, le méthylcarbamate de N-méthoxyéthyl-N-méthyle, le méthylcarbamate de N-méthoxyméthyl-N-méthyle, le méthoxyéthylcarbamate de N-méthyl-N-méthoxyéthyle, le méthoxyméthylcarbamate de N-méthyle-N-méthoxyéthyle et d'un mélange de ceux-ci.

3. Solution électrolytique non aqueuse pour une batterie secondaire au lithium selon la revendication 1, dans laquelle le sulfate cyclique est représenté par la formule (II) : 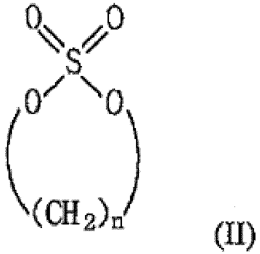 dans laquelle n désigne un nombre entier valant de 1 à 10.

4. Solution électrolytique non aqueuse pour une batterie secondaire au lithium selon la revendication 1, dans laquelle le sulfate cyclique est un composé quelconque sélectionné parmi le sulfate cyclique de 1,3-propanédiol, le sulfate cyclique de 1,3-butanediol, le sulfate cyclique de 1,3-pentanediol, le sulfate cyclique de 1,3-hexanediol et un mélange de ceux-ci.

5. Solution électrolytique non aqueuse pour une batterie secondaire au lithium selon la revendication 1, dans laquelle le sel de lithium contient un anion sélectionné dans le groupe constitué de F", Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, et (CF₃CF₂SO₂)₂N⁻.

6. Solution électrolytique non aqueuse pour une batterie secondaire au lithium selon la revendication 1, dans laquelle le composé amide et le sel de lithium forment un mélange eutectique.

7. Solution électrolytique non aqueuse pour une batterie secondaire au lithium selon la revendication 1, dans laquelle le rapport molaire du composé amide et du sel de lithium se situe dans l'intervalle allant de 1/1 à 8/1.

8. Solution électrolytique non aqueuse pour une batterie secondaire au lithium selon la revendication 1, dans laquelle le solvant organique est un solvant quelconque sélectionné parmi le carbonate d'éthylène, le carbonate de propylène, le carbonate de 1,2-butylène, le carbonate de 2,3-butylène, le carbonate de 1,2-pentylène, le carbonate de 2,3-pentylène, le carbonate de diméthyle, le carbonate de diéthyle, le carbonate de dipropyle, le carbonate d'éthylméthyle, le carbonate de méthylpropyle, le carbonate d'éthylpropyle, l'éther de diméthyle, l'éther de diéthyle, l'éther de dipropyle, l'éther de méthyléthyl, l'éther de méthylpropyle, l'éther d'éthylpropyle, l'acétate de méthyle, l'acétate d'éthyle, l'acétate de propyle, le propionate de méthyle, le propionate d'éthyle, le γ-butyrolactone, le γ-valérolactone, le γ-caprolactone, le σ-valérolactone, le ε-caprolactone et un mélange de ceux-ci.

9. Solution électrolytique non aqueuse pour une batterie secondaire au lithium selon la revendication 1, dans laquelle le solvant organique est présent en une quantité de 5 à 200 parties en poids par rapport à 100 parties en poids du composé amide.

10. Solution électrolytique non aqueuse pour une batterie secondaire au lithium selon la revendication 1, qui est utilisée en tant qu'électrolyte polymérique.

11. Batterie secondaire au lithium, comprenant une cathode, une anode et la solution électrolytique non aqueuse selon l'une quelconque des revendications 1 à 10.
